(19) Europäisches Patentamt
European Patent Office
Office européen des brevets

(11) **EP 3 591 962 B1**

(12) **EUROPÄISCHE PATENTSCHRIFT**

(45) Veröffentlichungstag und Bekanntmachung des Hinweises auf die Patenterteilung:
**09.09.2020 Patentblatt 2020/37**

(51) Int Cl.:
*H04N 5/361* *(2011.01)*   *H04N 5/365* *(2011.01)*

(21) Anmeldenummer: **19181907.7**

(22) Anmeldetag: **24.06.2019**

(54) **KOMPENSIEREN VON FIXED-PATTERN NOISE EINES BILDSENSORS**

COMPENSATION OF FIXED PATTERN NOISE OF A IMAGE SENSOR

COMPENSATION DU BRUIT À MOTIF FIXE D'UN CAPTEUR D'IMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2018 DE 102018116116**

(43) Veröffentlichungstag der Anmeldung:
**08.01.2020 Patentblatt 2020/02**

(73) Patentinhaber: **SICK AG**
**79183 Waldkirch (DE)**

(72) Erfinder:
 • **Schott, Michael**
  **79115 Freiburg (DE)**
 • **Hofmann, Dr. Christoph**
  **79183 Waldkirch (DE)**

(56) Entgegenhaltungen:
**DE-A1- 4 309 724   US-A1- 2016 277 691**

 • **SCHNEIDER V: "Fixed-pattern correction of HDR image sensors", RESEARCH IN MICROELECTRONICS AND ELECTRONICS, 2005 PHD JULY, 25, 2005, PISCATAWAY, NJ, USA,IEEE, PISCATAWAY, NJ, USA, Bd. 2, 1. Juli 2005 (2005-07-01), Seiten 99-102, XP010859017, DOI: 10.1109/RME.2005.1542946 ISBN: 978-0-7803-9345-5**

**Beschreibung**

Die Erfindung betrifft ein Verfahren zum Kompensieren von Fixed-Pattern-Noise eines Bildsensors sowie eine Kamera mit einem Bildsensor, deren Signale mit einem solchen Verfahren korrigiert werden.

Mit Fixed-Pattern-Noise (FPN) wird ein spezifisches Rauschmuster von Bildsensoren bezeichnet, das durch unterschiedliches Verhalten der einzelnen Pixel entsteht. Es wird unterteilt in eine Komponente bei Lichteinfall (PRNU, Photo Response Non-Uniformity) und einen Dunkelanteil (DSNU, Dark Signal Non-Uniformity).

Neben dem zeitlichen Rauschen ist FPN die zweite wesentliche Störquelle, insbesondere von CMOS-Bildsensoren. FPN selbst hat keine zeitliche, sondern nur eine räumliche Abhängigkeit, da es sich von Pixel zu Pixel ändert. Jedes Pixel hat demnach einen spezifischen Fehler. Ist dieser Fehler bekannt, so kann er korrigiert werden. Je nach Bauweise des Bildsensors können die Parameter unterschiedlich sein, von denen der Fehler abhängt.

Im Stand der Technik gibt es zahlreiche Ansätze, FPN zu unterdrücken oder zu kompensieren.

In der US 3 949 162 A werden für die FPN-Kompensation eines Detektorarrays die Signale der Detektoreinheiten ohne Beleuchtung gemessen, um diese Kompensationssignale später abzuziehen. Dieses Vorgehen hat den Nachteil, dass die gespeicherten Kompensationssignale nur für den Arbeitspunkt gültig sind, bei dem sie gemessen wurden. Bei einem anderen Arbeitspunkt im Betrieb stimmt die Korrektur nicht mehr, und das wegen der erheblichen Temperaturabhängigkeit der Dunkelströme in deutlichem Maße.

Die US 8 622 302 B2 wird vor der eigentlichen Aufnahme mindestens ein Dunkelbild mit verkürzter Belichtungszeit aufgenommen. Das Dunkelbild wird dann von der Aufnahme abgezogen. Das Dunkelbild wird periodisch oder bei Bedarf aktualisiert, etwa bei einer Temperaturänderung. Dabei geht jedoch im Betrieb Zeit verloren, um das aktuelle Dunkelbild zu erzeugen.

Die EP 3 062 347 A1 erwähnt einleitend eine FPN-Kompensation, bei der wie in US 3 949 162 ein Dunkelbild von der eigentlichen Aufnahme abgezogen wird, bietet aber gar keine Lösung für Temperaturänderungen an.

Ein beispielsweise in DE 10 2015 003 134 B4 oder US 8 975 570 B2 diskutiertes bekanntes Korrekturverfahren ist Correlated Double Sampling. Der Nachteil an diesem Verfahren ist, dass pro Pixel mehr Transistoren benötigt werden, was zu einer Reduzierung der nutzbaren Chipfläche für die photoempfindlichen Bereiche führt.

Die US 9 106 857 B1 befasst sich mit der FPN-Kompensation in einem TDI-Modus (Time Delay and Integration) und misst jeweils Dunkelinformation mit einem pro Spalte gewählten Pixel. Das Verfahren erfordert recht großen Aufwand zur Laufzeit und ist an den TDI-Modus gebunden.

In EP 2 721 810 B1 wird unter anderem die FPN-Kompensation angesprochen. Dabei wird vorgeschlagen, die Einflüsse des FPN je Pixel mittels sogenannte Column Drift Compensation zu schätzen. Dabei wird nur eine fixe Kompensationsaufnahme gespeichert, soweit wie ein Dunkelbild in der oben zitierten US 3 949 162 A, und diese anhand einiger Referenzzeilen des Bildsensors an Driften angepasst. Das bedeutet jedoch einen erheblichen Aufwand und die Überwachung der Referenzzeilen.

Es ist daher Aufgabe der Erfindung, die Kompensation von Fixed-Pattern-Noise eines Bildsensors zu verbessern.

Aus der DE 43 09 724 A1 ist ein Verfahren zur temperaturabhängigen Dunkelstromkompensation bei CCD-Bildsensoren bekannt. Dabei werden die Dunkelströme für jedes Bildpixel einmalig bei vollständig abgeschirmtem CCD-Bildsensor ermittelt, und dann wird jeweils die momentane Sensortemperatur gemessen und so der temperaturabhängige Dunkelstrom kompensiert.

Die US 2016/0277691 A1 offenbart eine Bildsensorvorrichtung mit einem Temperaturschätzblock, der ein Temperaturcodesignal erzeugt, sowie mit einem Kalibrationsblock, um anhand des Temperaturcodesignals Rauschen im Pixelsignal zu beseitigen.

Diese Aufgabe wird durch ein Verfahren zum Kompensieren von Fixed-Pattern-Noise eines Bildsensors nach Anspruch 1 sowie eine Kamera nach Anspruch 11 gelöst, in der die Signale eines Bildsensors mit einem solchen Verfahren korrigiert werden. Der Bildsensor ist insbesondere ein CMOS-Bildsensor. Bei der FPN-Kompensation geht es insbesondere um die DSNU, da die PRNU nur vom Signalwert abhängt und daher durch eine einfache Multiplikation korrigiert werden kann. Es wird der Dunkelstrom in dem jeweiligen Pixel bestimmt und auf dessen Basis das Signal des Pixels korrigiert. Diese Korrektur wird einzeln für alle Pixel oder zumindest die Pixel in mindestens einem interessierenden Bereich (ROI) durchgeführt.

Die Erfindung geht von dem Grundgedanken aus, nur einmalig Referenzwerte für die FPN-Kompensation zu messen und diese dann aber zum Ausgleich der starken Temperaturabhängigkeit der Dunkelströme an eine gemessene Temperatur T des Bildsensors anzupassen. Dazu wird vorab ein Referenzdunkelstrom je Pixel bei einer Referenztemperatur $T_{Ref}$ bestimmt, beispielsweise bei Raumtemperatur. Damit ist vorzugsweise genau eine Referenztemperatur $T_{Ref}$ gemeint, es soll nicht etwa mit hohem Aufwand das Temperaturverhalten in einer großen, temperaturabhängigen Korrekturtabelle hinterlegt werden. Vielmehr wird der Referenzdunkelstrom auf die derzeitige Temperatur T herauf- oder gegebenenfalls auch heruntergerechnet und dafür ein temperaturabhängiger Anpassungsfaktor verwendet, in den also die gemessene Temperatur T eingeht.

Die Erfindung hat den Vorteil, das FPN und insbesondere das DSNU für jeden Betriebszustand korrigieren zu können, ohne dass hierfür zusätzliche Zeit für das Auslesen des Bildes oder zusätzliche Fläche auf dem Bildsensor benötigt wird. Die Erhebung der dazu benötigten Daten kann bei Raumtemperatur erfolgen. Die Korrektur kann dann für unterschiedliche Arbeitspunkte angewandt werden. Hierdurch wird der Messaufwand pro Bildsensor gegenüber einer temperaturabhängigen Vermessung erheblich reduziert.

Der Anpassungsfaktor beträgt vorzugsweise $2^{\frac{T-T_{Ref}}{T_d}}$, worin $T_d$ eine Verdopplungstemperatur beziehungsweise diejenige Temperaturdifferenz bezeichnet, bei der sich jeweils ein Dunkelstrom verdoppelt. Ein typischer Wert der Verdopplungstemperatur $T_d$ liegt in der Größenordnung von 10K, beispielsweise bei 8K. Die übrigen Parameter des Anpassungsfaktors, nämlich die gemessene Temperatur T und die Referenztemperatur $T_{Ref}$, sind bereits eingeführt.

Die Pixel weisen bevorzugt jeweils eine Photodiode und eine Speicherzelle auf, in welche die Ladung der Photodiode nach einer Integrationszeit verschoben wird, wobei der Dunkelstrom aus einem ersten Dunkelstrom der Photodiode und einem zweiten Dunkelstrom der Speicherzelle zusammengesetzt ist. Bei einem Global-Shutter-Bildsensor werden Ladungen in der Photodiode erzeugt und am Ende der Integrationszeit in eine analoge Speicherzelle verschoben, wo diese bis zum Auslesen gespeichert werden. An beiden Stellen treten unterschiedliche Dunkelströme auf, nämlich der erste Dunkelstrom in der Photodiode während der Integrationszeit und der zweite Dunkelstrom in der Speicherzelle, bis diese nach einer Speicherdauer ausgelesen wird.

Das Signal des Pixels wird bevorzugt korrigiert, indem der erste Dunkelstrom mit einer Integrationszeit und der zweite Dunkelstrom mit einer Speicherdauer multipliziert wird. Das ergibt die Dunkelladungen, die vom Signal der Pixel abzuziehen sind, damit nur das von Lichteinfall erzeugte Signal übrig bleibt. Zu den beiden Dunkelströmen kann noch ein festes Offset für zusätzliche, weder zeit- noch temperaturabhängige Effekte hinzukommen, das für alle Pixel gleich ist und durch eine einfache Referenzmessung bestimmt werden und dann im Betrieb ebenfalls abgezogen werden kann. Wird der Bildsensor nur mit fixer Belichtungs- beziehungsweise Speicherzeit betrieben, so ist eine getrennte Behandlung der beiden Dunkelströme nicht unbedingt erforderlich, die dann als ein kumulierter Dunkelstrom betrachtet werden können.

Der erste Dunkelstrom wird bevorzugt mit dem temperaturabhängigen Anpassungsfaktor aus einem ersten Referenzdunkelstrom bei der Referenztemperatur T und/oder der zweite Dunkelstrom mit dem temperaturabhängigen Anpassungsfaktor aus einem zweiten Referenzdunkelstrom bei der Referenztemperatur T bestimmt. Es werden also Referenzwerte für beide Dunkelstromkomponenten bestimmt, um damit eine temperaturkompensierte Bestimmung beider Dunkelströme vornehmen zu können.

Zur Bestimmung des ersten Referenzdunkelstroms und/oder des zweiten Referenzdunkelstroms werden bevorzugt Referenzmessungen bei variierter Integrationszeit und/oder Speicherdauer durchgeführt. Durch die Variation von Integrationszeit beziehungsweise Speicherdauer werden zusätzliche Daten erzeugt, um die beiden Referenzdunkelströme einzeln ermitteln zu können.

Der erste Referenzdunkelstrom und/oder der zweite Referenzdunkelstrom wird bevorzugt durch eine Regressionsanalyse der Signale des jeweiligen Pixels anhand der durch Variation von Integrationszeit und/oder Speicherdauer gewonnenen Stützpunkte bestimmt. Mit dieser Art der Analyse werden die zusätzlichen Daten effizient genutzt, um eine gute Schätzung der beiden Referenzdunkelströme zu erhalten.

Die Speicherdauer wird vorzugsweise durch Verändern der Auslesezeit des Bildsensors variiert. Die Variation der Integrationszeit für die Referenzmessungen ist unproblematisch, da dies ein freier Parameter ist, mit dem der Bildsensor je nach Bedarf betrieben wird. Die Speicherdauer jedoch ist an das Auslesetiming gebunden. Sofern der Bildsensor die Möglichkeit bietet, die Speicherdauer zu verändern, so ist das eine einfache Art, sie nach Bedarf zu variieren.

Die Speicherdauer wird bevorzugt durch Verändern der Reihenfolge der ausgelesenen Pixelzeilen oder Pixelspalten variiert. Ob Pixel zeilen- oder spaltenweise ausgelesen werden, ist eine Frage der Architektur des Bildsensors, und dies wird hier gleichwertig nebeneinander gestellt. Durch die veränderte Reihenfolge ergeben sich im Auslesezyklus des Bildsensors für die Pixel andere Speicherdauern. Das ist eine Alternative dazu, die Speicherdauer gezielt zu verändern und sogar dann noch nützlich, wenn der Bildsensor eine gezielte Veränderung der Speicherdauer zulässt. Denn auch dann bleibt die Speicherdauer für zumindest die erste ausgelesene Pixelzeile oder Pixelspalte extrem kurz, was sich durch eine gezielte Vervielfachung auch nur unwesentlich verlängert. Mit derart kleinen Speicherdauern und Zeitdifferenzen ist eine sinnvolle Regression kaum möglich, so dass die FPN-Kompensation für die ersten Pixelzeilen oder Pixelspalten ungenau bliebe. Bei geänderter Reihenfolge sind nicht mehr immer dieselben ersten Pixelzeilen oder Pixelspalten betroffen.

Die Speicherdauer wird bevorzugt durch Auslesen von Pixelzeilen oder Pixelspalten in umgekehrter Reihenfolge variiert. Das ist ein Spezialfall einer geänderten Reihenfolge, bei dem die Pixelzeilen einmal von oben nach unten und einmal von unten nach oben ausgelesen werden, entsprechende Pixelspalten einmal von links nach rechts und einmal von rechts nach links. Dadurch werden gerade in den kritischen ersten Pixelzeilen oder Pixelspalten große Variationen eingeführt, die beim Rückwärtsdurchlauf zu den letzten Pixelzeilen oder Pixelspalten werden.

Die Speicherdauer wird bevorzugt durch einen veränderten Auslesebereich variiert, der nicht mit der ersten Zeile oder Spalte und nicht mit der letzten Zeile oder Spalte beginnt. Auch dadurch verschiebt sich der Zeitpunkt, wann Pixel im Auslesezyklus an die Reihe kommen, und damit ändert sich die Speicherdauer. Hier ist ein Spezialfall, in einer n-ten Zeile oder Spalte zu beginnen, insbesondere in der Mitte, und dann das Auslesen in zwei möglicherweise ungleichen Hälften zunächst nach unten beziehungsweise rechts und anschließend nach oben beziehungsweise links fortzusetzen.

Zur Messung der Temperatur T wird vorzugsweise mindestens ein abgedunkeltes Pixel verwendet. Ein abgedunkeltes Pixel ist ganz unabhängig vom Lichteinfall und erzeugt nur den Dunkelstrom. Die sonst zur Kompensation verwendete Temperaturabhängigkeit kann daher umgekehrt werden, um aus dem gemessenen Dunkelstrom die derzeitige Temperatur zu bestimmen. So wird ein abgedunkeltes Pixel zu einem sehr einfachen und kostengünstigen, direkt auf dem Bildsensor integrierten Temperaturfühler. Das kann auch mit einem weiteren Temperaturfühler kombiniert werden, so dass die Temperatur zweikanalig beziehungsweise diversitär-redundant gemessen wird, was in der Sicherheitstechnik von Bedeutung sein kann.

In einer erfindungsgemäßen Kamera werden die aus dem Bildsensor ausgelesenen Signale mit einer der Ausführungsformen des erfindungsgemäßen Verfahrens zum Kompensieren von Fixed-Pattern-Noise korrigiert. Die Kamera ist insbesondere eine Sicherheitskamera, die für den Personenschutz ausgebildet ist und dafür mit Maßnahmen wie Selbsttests, Mehrkanaligkeit und Redundanz oder diversitärer Redundanz Fehler aufdeckt oder vermeidet, welche die Anwendung in einer Personen gefährdenden Weise beeinträchtigen könnten. Derartige Maßnahmen sind in Sicherheitsnormen verankert.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische Darstellung einer Kamera mit Kompensation des Fixed-Pattern-Noise ihres Bildsensors;

Fig. 2    eine schematische Darstellung eines Pixels eines Bildsensors;

Fig. 3    ein Ausleseschema für einen Bildsensor, mit dem eine Speicherdauer der Signale in den einzelnen Pixeln variiert wird; und

Fig. 4    ein weiteres Ausleseschema für einen Bildsensor, um die Speicherdauer zu variieren.

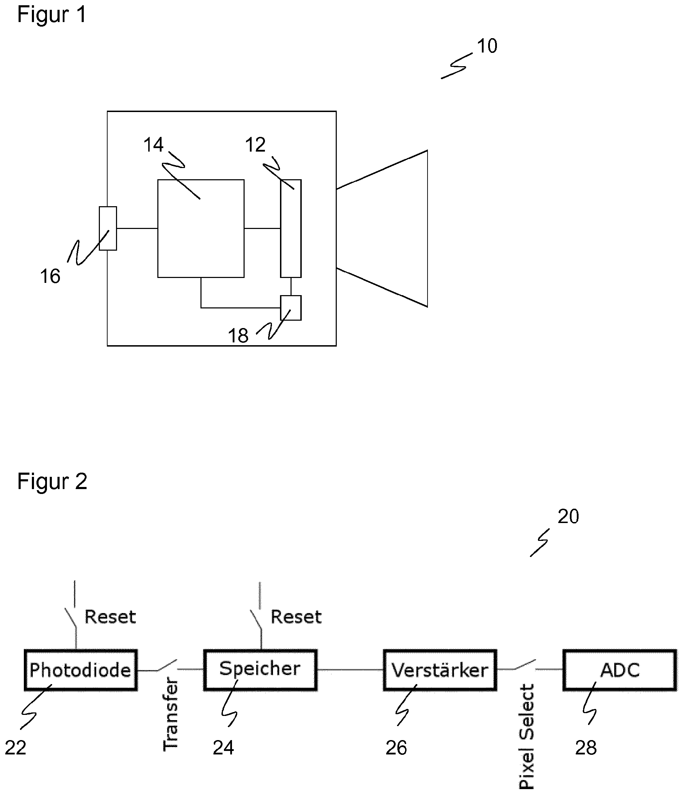

Figur 1 ist eine sehr vereinfachte schematische Darstellung einer Kamera 10 mit Kompensation des Fixed-Pattern-Noise (FPN) ihres Bildsensors 12. Der Aufbau einer Kamera 10 und die Hardwarestruktur eines Bildsensors 12 mit einer Vielzahl von Pixeln, die vorzugsweise zu einer Matrix angeordnet sind, werden hier als bekannt vorausgesetzt. Die Erfindung eignet sich besonders für einen Bildsensor 12 in CMOS-Technologie mit einem Global Shutter. Die Kamera 10 kann zahlreiche weitere Elemente wie variable oder fixe Optiken, Beleuchtung, Bedienelemente und Auswertungsbausteine für Bildaufbereitung oder -auswertung aufweisen. Vorzugsweise ist die Kamera 10 eine 3D-Kamera mit einem beliebigen 3D-Verfahren, wie eine Lichtlaufzeitkamera oder eine Stereokamera.

Von allen denkbaren Komponenten der Kamera 10 ist außer dem Bildsensor 12 nur eine Auswertungseinheit 14, in der die erfindungsgemäße FPN-Kompensation implementiert ist, sowie eine Ausgabeschnittstelle 16 gezeigt. Alternativ wäre denkbar, zumindest einen Teil dieser Auswertungseinheit auf dem Chip des Bildsensors 12 zu integrieren. Weiterhin wird für die Korrektur die aktuelle Temperatur T des Bildsensors 12 benötigt, und dazu ist ein Temperaturfühler 18 vorgesehen. Der extern dargestellte Temperaturfühler 18 ist alternativ in den Bildsensor 12 integriert. Bevorzugt fungiert dazu mindestens ein abgedunkeltes Pixel des Bildsensors 12 als Temperaturfühler 18. Die im Folgenden vorgestellte Berechnung der Dunkelströme (DC, Dark Current) in Abhängigkeit von der gemessenen Temperatur lässt sich nämlich ganz einfach umkehren, um aus einem mit dem abgedunkelten Pixel gemessenen Dunkelstrom die Temperatur T zurückzurechnen.

Figur 2 zeigt eine schematische Darstellung eines einzelnen Pixels 20 des Bildsensors 12. Empfangslicht der Kamera 10, das auf eine Photodiode 22 des Pixels 20 fällt, generiert dort Ladungsträger, die in der Photodiode 22 gespeichert werden. Die Ladung wird nach einer Integrationszeit $t_{int}$ seit dem Zeitpunkt, zu dem die Photodiode 22 aus dem Reset genommen wurde, in eine angeschlossene analoge Speicherzelle 24 transferiert. Dort wird die Ladung für eine Speicherdauer $t_{SP}$ gespeichert, bis das Pixel 20 dann über einen Verstärker 26 auf einen Analog-Digital-Converter (ADC) 28 gelegt wird.

Sowohl Photodiode 22 als auch analoge Speicherzelle 24 erzeugen jeweils einen eigenen Dunkelstrom $DC_{PD}$ beziehungsweise $DC_{Sp}$. Zusätzlich wird ein konstantes Offset *const* angenommen, das seinen Ursprung in allen Komponenten haben kann. Das Ausgangssignal $\mu$ wird ohne einfallendes Licht

$$\mu = DC_{PD} \times t_{int} + DC_{Sp} \times t_{Sp} + const.$$

Die Dunkelströme haben eine starke Temperaturabhängigkeit. Insbesondere ist für einen CMOS-Bildsensor

$$DC = DC_{Ref} \times 2^{\frac{T-T_{Ref}}{T_d}},$$

wobei T die mit dem Temperaturfühler 18 gemessene Temperatur, $T_{Ref}$ eine bekannte Referenztemperatur und beispielsweise die Raumtemperatur, $DC_{Ref}$ ein bei der Referenztemperatur $T_{Ref}$ gemessener Dunkelstrom und $T_d$ eine Verdoppelungstemperatur ist. Die Verdoppelungstemperatur $T_d$ liegt typischerweise in der Größenordnung von 10K, beispielsweise bei ca. 8K, und wird für einen bestimmten Typ Bildsensor 12 als konstant und bekannt angenommen. Es wäre alternativ möglich, diesen Parameter für den Bildsensor 12 zu messen. Diese Temperaturabhängigkeit gilt sowohl für den Dunkelstrom $DC_{PD}$ der Photodiode 22 als auch für den Dunkelstrom $DC_{Sp}$ der analogen Speicherzelle 24.

Mit Hilfe dieser Formel kann der aktuelle Dunkelstrom beider Komponenten 22, 24 bei der herrschenden Temperatur T bestimmt werden, sofern zuvor der jeweilige Referenzdunkelstrom $DC_{Ref}$ bei der Referenztemperatur $T_{Ref}$ gespeichert wurde. Aus der darüber angegebenen Formel für das Ausgangssignal $\mu$ ohne Lichteinfall ergibt sich dann ein Korrekturwert, der im Betrieb für die FPN-Kompensation von dem Messsignal bei Lichteinfall abgezogen wird.

Dieses erfindungsgemäße Verfahren zur FPN-Korrektur von Bilddaten des Bildsensors 12 wird nun vorteilhafterweise ergänzt durch ein Verfahren für die Datenerfassung und Bestimmung der Referenzdunkelströme $DC_{Ref,PD}$ und $DC_{Ref,Sp}$ für jedes zu korrigierende Pixel 20, wobei nur auf das Ausgangssignal $\mu$ zugegriffen werden kann.

Dazu werden bei der Referenztemperatur $T_{Ref}$ Referenzmessungen des Ausgangssignals $\mu$ in den jeweiligen Pixeln 20 unter Variation der Zeiten $t_{int}$ und $t_{SP}$ durchgeführt, während der Bildsensor 12 von Lichteinfall abgeschirmt ist. Daraus lassen sich die gesuchten Referenzdunkelströme $DC_{Ref,PD}$ und $DC_{Ref,Sp}$ für jedes Pixel 20 beispielsweise mit einer Regressionsanalyse auffinden. Um dabei zeitliches Rauschen zu eliminieren, können jeweils Bildsätze mit mehreren Bildern bei gleichen Zeiten $t_{int}$ und $t_{SP}$ ausgelesen werden, um hieraus einen Mittelwert zu bilden. Dabei sei darauf hingewiesen, dass ein unter den genannten Bedingungen ohne Lichteinfall aufgenommenes Bild gerade die Dunkelströme repräsentiert.

Während die Integrationszeit $t_{int}$ frei wählbar und damit deren Variation unproblematisch ist, stellt es eine Herausforderung dar, die Speicherdauer $t_{Sp}$ zu verändern, da sie an die Auslesetimings des Bildsensors 12 geknüpft ist. Typischerweise werden Zeilen oder Spalten von Pixeln 20 des Bildsensors 12 parallel ausgelesen. Die erste ausgelesene Zeile oder Spalte wird direkt nach dem globalen Ende der Integrationszeit $t_{int}$ (Global Shutter Prinzip) ausgelesen und hat daher eine Speicherdauer $t_{Sp}$ nahe Null. Die letzte ausgelesene Zeile oder Spalte hat die längste Speicherdauer $t_{Sp}$. Sind in dem Bildsensor 12 verschiedene Auslesezeiten einstellbar, dann können einfach zwei oder mehr Bilder oder Bildsätze mit unterschiedlichen Auslesezeiten aufgenommen werden.

Selbst wenn die Möglichkeit besteht, die Auslesezeiten einzustellen, bleibt die Speicherdauer $t_{Sp}$ für die erste ausgelesene Zeile beziehungsweise Spalte oder auch noch für die ersten $i$ ausgelesenen Zeilen beziehungsweise Spalten sehr kurz. Das erschwert eine Regressionsanalyse und macht sie, soweit überhaupt noch durchführbar, zumindest unpräzise.

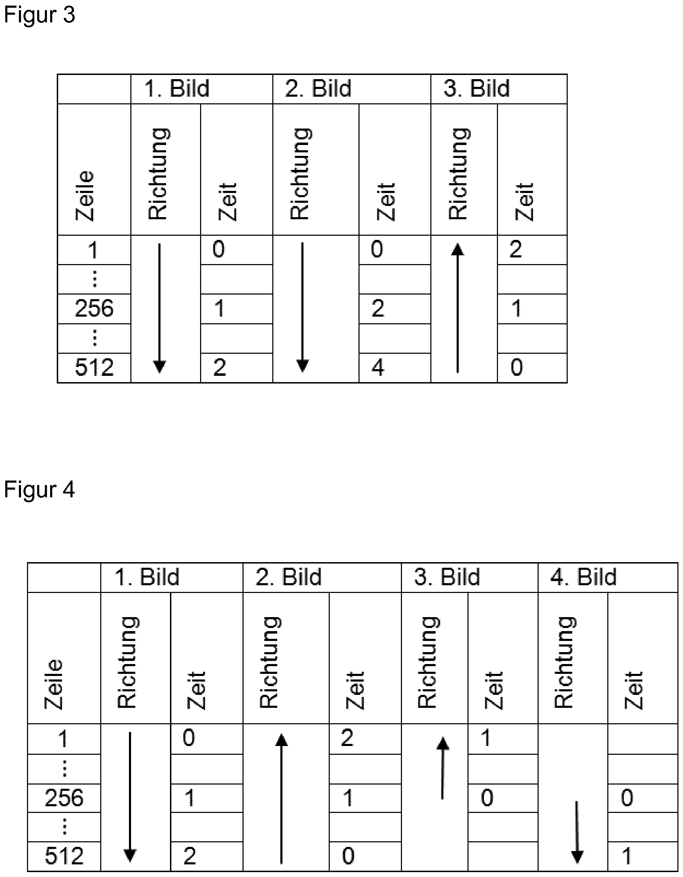

Figur 3 zeigt ein mögliches Ausleseschema, um dieses trotz einstellbarer Auslesezeiten bestehende Problem zu lösen. Dabei wird ab nun nur noch der Fall von parallel ausgelesenen Zeilen betrachtet, die Überlegungen gelten ganz analog für parallel ausgelesene Spalten. Die Zeilen der Tabelle der Figur 3 entsprechend den hier beispielhaft 512 Zeilen des Bildsensors 12. Es wird ein erstes Bild mit Auslesezeiten aufgenommen, die in beliebigen Einheiten dazu führen, dass die 256te Zeile nach $t_{Sp} = 1$ und die 512te Zeile nach $t_{Sp} = 2$ ausgelesen wird, die übrigen Zeilen bei entsprechenden Zwischenwerten. Für die Aufnahme eines zweiten Bildes werden die Auslesezeiten verdoppelt, so dass die jeweiligen Pixel mit variiertem $t_{Sp}$ ausgelesen werden.

Das ändert aber nichts daran, dass auch noch im zweiten Bild in der ersten Zeile beziehungsweise den $i$ ersten Zeilen die Speicherdauer $t_{Sp}$ bei oder nahe Null bleibt. Deshalb wird für die Aufnahme eines dritten Bildes die Ausleserichtung umgekehrt, also die 512te oder letzte Zeile zuerst und die erste Zeile zuletzt ausgelesen. Damit ist auch für die erste Zeile beziehungsweise für die ersten $i$ Zeilen die Speicherdauer $t_{Sp}$ bei einem Wert deutlich ungleich Null variiert.

Figur 4 zeigt ein weiteres Ausleseschema für den Fall, dass eine Veränderung der Auslesezeit nicht möglich ist oder aus anderen Gründen vermieden werden soll. Anstelle der Auslesezeit wird hier der auszulesende Bildbereich variiert. Zunächst werden ähnlich wie in Figur 3 ein erstes Bild in der üblichen Richtung von oben nach unten und ein zweites Bild von unten nach oben ausgelesen. Allerdings kann nun die Auslesezeit nicht variiert werden, sie ist im ersten Bild und zweiten Bild gleich. Deshalb ergibt sich in den mittleren Zeilen noch keine oder keine ausreichende Variation der Speicherdauern $t_{Sp}$. Um auch für die mittleren Zeilen Stützstellen für die Regressionsanalyse mit variierten Speicherdauern $t_{Sp}$ zu erzeugen, wird als drittes Bild und viertes Bild je ein halbes Bild von der Mitte nach oben beziehungsweise von der Mitte nach unten ausgelesen. In Summe finden sich dann für jede Zeile des Bildsensors 12 in einer Spalte der Tabelle nach Figur 4 zwei deutlich unterschiedliche Einträge für die Speicherdauern $t_{Sp}$ bei zumindest zwei der vier aufgenommenen Bilder.

Die Figuren 3 und 4 zeigen nur Beispiele für Ausleseschemata, es gibt zahlreiche weitere Möglichkeiten. Dazu zählen Kombinationen der Gedanken aus Figur 3 und 4, also das Verändern der Auslesezeiten, der Ausleserichtung und/oder eine Aufteilung in Bildbereiche. Dabei sind insbesondere die Aufnahme einer anderen Anzahl als drei oder vier Bilder, andere Variationen der Auslesezeiten als ein Verdoppeln, eine mehrfache Richtungsänderung des Auslesens, der Beginn des Auslesens in irgendeiner Zeile, eine Zweiteilung in Bildbereiche nicht in der Mitte sowie eine Aufteilung in mehr als zwei Bildbereiche möglich.

Die erfindungsgemäße FPN-Kompensation lässt sich vereinfachen, wenn der Bildsensor 12 nur bei einer festen Belichtungszeit und mit einem definierten Ausleseschema betrieben wird. Dann kann anstelle der beiden Dunkelströme $DC_{PD}$ und $DC_{Sp}$ nur ein kumulierter Dunkelstrom verwendet werden. Das Offset *const* wird beispielsweise dadurch bestimmt, dass der Bildsensor 12 auf seine minimale Belichtungszeit programmiert und jeweils nur eine Zeile ausgelesen wird, letzteres um die Speicherdauer $t_{Sp}$ zu minimieren. Für die nächste Messung wird der Bildsensor 12 in den Betriebszustand der Anwendung mit der festen Belichtungszeit und dem definierten Ausleseschema versetzt. Die Differenz aus Messsignal und Offset ergibt dann die Dunkelladung pro Pixel. Diese kann dann wieder wie oben auf die Temperatur skaliert werden. Ein Vorteil dieses Verfahrens ist der reduzierte Speicher- und Übertragungsbedarf für Korrekturwerte, wofür allerdings der Nachteil einer Einschränkung auf eine feste Belichtungszeit in Kauf genommen werden muss.

**Patentansprüche**

1. Verfahren zum Kompensieren von Fixed-Pattern-Noise eines Bildsensors (12) mit einer Vielzahl von Pixeln (20), bei dem das Signal eines jeweiligen Pixels (20) anhand eines für dieses Pixel (20) bestimmten Dunkelstroms korrigiert wird,
wobei die Temperatur T des Bildsensors (12) gemessen wird und der Dunkelstrom eines jeweiligen Pixels (20) bestimmt wird, indem ein vorab für dieses Pixel (20) bei einer Referenztemperatur $T_{Ref}$ bestimmter Referenzdunkelstrom ($DC_{Ref,PD}$, $DC_{Ref,Sp}$) mit einem temperaturabhängigen Anpassungsfaktor an die Temperatur T angepasst wird, wobei die Pixel (20) jeweils eine Photodiode (22) und eine Speicherzelle (24) aufweisen, in welche die Ladung der Photodiode (20) nach einer Integrationszeit ($t_{int}$) verschoben wird, wobei der Dunkelstrom aus einem ersten Dunkelstrom der Photodiode (22) und einem zweiten Dunkelstrom der Speicherzelle (24) zusammengesetzt ist,
**dadurch gekennzeichnet,**
**dass** der zweite Dunkelstrom mit dem temperaturabhängigen Anpassungsfaktor aus einem zweiten Referenzdunkelstrom ($DC_{Ref,Sp}$) bei der Referenztemperatur $T_{Ref}$ bestimmt wird und dass zur Bestimmung des zweiten Referenzdunkelstroms ($DC_{Ref,Sp}$) Referenzmessungen bei variierter Speicherdauer ($t_{Sp}$) durchgeführt werden.

2. Verfahren nach Anspruch 1,
wobei der Anpassungsfaktor $2^{\frac{T-T_{Ref}}{T_d}}$ beträgt, worin

$T_d$ eine Temperaturdifferenz bezeichnet, bei der sich jeweils ein Dunkelstrom verdoppelt.

3. Verfahren nach Anspruch 1 oder 2,
wobei das Signal des Pixels (20) korrigiert wird, indem der erste Dunkelstrom mit einer Integrationszeit ($t_{int}$) und der zweite Dunkelstrom mit einer Speicherdauer ($t_{Sp}$) multipliziert wird.

4. Verfahren nach einem der vorhergehenden Ansprüche,
wobei der erste Dunkelstrom mit dem temperaturabhängigen Anpassungsfaktor aus einem ersten Referenzdunkelstrom ($DC_{Ref,PD}$) bei der Referenztemperatur $T_{Ref}$ bestimmt wird.

5. Verfahren nach Anspruch 4,
wobei zur Bestimmung des ersten Referenzdunkelstroms ($DC_{Ref,PD}$) Referenzmessungen bei variierter Integrationszeit ($t_{int}$) durchgeführt werden.

6. Verfahren nach einem der vorhergehenden Ansprüche,
wobei der erste Referenzdunkelstrom ($DC_{Ref,PD}$) und/oder der zweite Referenzdunkelstrom ($DC_{Ref,Sp}$) durch eine Regressionsanalyse der Signale des jeweiligen Pixels (20) anhand der durch Variation von Integrationszeit ($t_{int}$) und/oder Speicherdauer ($t_{Sp}$) gewonnenen Stützpunkte bestimmt wird.

7. Verfahren nach einem der vorhergehenden Ansprüche,
wobei die Speicherdauer ($t_{Sp}$) durch Verändern der Auslesezeit des Bildsensors (12) variiert wird.

8. Verfahren nach einem der vorhergehenden Ansprüche,
wobei die Speicherdauer ($t_{Sp}$) durch Verändern der Reihenfolge der ausgelesenen Pixelzeilen oder Pixelspalten variiert wird, insbesondere durch Auslesen von Pixelzeilen oder Pixelspalten in umgekehrter Reihenfolge.

9. Verfahren nach einem der vorhergehenden Ansprüche,
wobei die Speicherdauer ($t_{Sp}$) durch einen veränderten Auslesebereich variiert wird, der nicht mit der ersten Zeile oder Spalte und nicht mit der letzten Zeile oder Spalte beginnt.

10. Verfahren nach einem der vorhergehenden Ansprüche,
wobei zur Messung der Temperatur T mindestens ein abgedunkeltes Pixel (20) verwendet wird.

11. Kamera (10), insbesondere Sicherheitskamera, mit einem Bildsensor (12) und einer Auswertungseinheit (14), die dafür ausgebildet ist, Signale von Pixeln (20) des Bildsensors (12) mit einem Verfahren nach einem der vorhergehenden Ansprüche zu korrigieren.

## Claims

1. A method of compensating for fixed pattern noise of an image sensor (12) having a plurality of pixels (20), wherein the signal of a respective pixel (20) is corrected based on a dark current determined for that pixel (20), wherein the temperature T of the image sensor (12) is measured and the dark current of a respective pixel (20) is determined by adapting a reference dark current ($DC_{Ref,PD}$, $DC_{Ref,Sp}$) previously measured for that pixel (20) at a reference temperature $T_{Ref}$ with a temperature-dependent adaptation factor to the temperature T, wherein the pixels (20) each comprise a photodiode (22) and a memory cell (24) into which the charge of the photodiode (20) is transferred after an integration time (tint), the dark current comprising a first dark current of the photodiode (22) and a second dark current of the memory cell (24), **characterized in that** the second dark current is determined with the temperature-dependent adaptation factor from a second reference dark current ($DC_{Ref,Sp}$) at the reference temperature $T_{Ref}$ and that, in order to determine the second reference dark current ($DC_{Ref,Sp}$), reference measurements with varied storage duration ($t_{Sp}$) are carried out.

2. The method according to claim 1, wherein the adjustment factor is $2^{\frac{T-T_{Ref}}{T_d}}$ wherein $T_d$ denotes a temperature difference at which a dark current doubles.

3. The method according to claim 1 or 2, wherein the signal of the pixel (20) is corrected by integrating the first dark current with an integration time ($t_{int}$) and the second dark current is multiplied with a storage period ($t_{Sp}$).

4. The method according to one of the preceding claims, wherein the first dark current is determined from a first reference dark current ($DC_{Ref,PD}$) at the reference temperature $T_{Ref}$ with the temperature-dependent adaptation factor.

5. The method according to claim 4, wherein, in order to determine the first reference dark current ($DC_{Ref,PD}$), reference measurements with varied integration time ($t_{int}$) are carried out.

6. The method according to one of the preceding claims, wherein the first reference dark current($DC_{Ref,PD}$) and/or the second reference dark current ($DC_{Ref,Sp}$) is determined by means of a regression analysis of the signals of the respective pixel (20) on the basis of sampling points obtained by variation of integration time ($t_{int}$) and/or storage duration ($t_{Sp}$).

7. The method according to one of the preceding claims, wherein the storage time ($t_{Sp}$) is varied by changing the readout time of the image sensor (12).

8. The method according to one of the preceding claims, wherein the storage duration ($t_{Sp}$) is varied by changing the order of the pixel lines or pixel columns read out, in particular by reading out pixel lines or pixel columns in reverse order.

9. The method according to one of the preceding claims, wherein the storage duration ($t_{Sp}$) is varied by a modified readout range that does not begin with the first line or column and not with the last line or column.

10. The method according to one of the preceding claims, wherein at least one darkened pixel (20) is used for the measurement of the temperature T.

11. A camera (10), in particular a safety camera, having an image sensor (12) and an evaluation unit (14), which is configured to correct signals from pixels (20) of the image sensor (12) with a method according to one of the preceding claims.

## Revendications

1. Procédé de compensation du bruit à motif fixe d'un capteur d'images (12) comportant une multitude de pixels (20), dans lequel le signal d'un pixel (20) respectif est corrigé sur la base d'un courant d'obscurité déterminé pour ce pixel (20), dans lequel la température T du capteur d'images (12) est mesurée et le courant d'obscurité d'un pixel (20) respectif est déterminé en adaptant un courant d'obscurité de référence (DCRef,PD, DCRef,Sp), déterminé à l'avance pour ce pixel (20) à une température de référence $T_{Ref}$ à la température $T$ avec un facteur d'adaptation dépendant de la température, les pixels (20) comprennent chacun une photodiode (22) et une cellule de mémoire (24) jusque dans laquelle la charge de la photodiode (20) est décalée après un temps d'intégration (tint), le courant d'obscurité étant composé d'un premier courant d'obscurité de la photodiode (22) et d'un deuxième courant d'obscurité de la cellule de mémoire (24),

**caractérisé en ce que**

le deuxième courant d'obscurité est déterminé avec un facteur d'adaptation dépendant de la température à partir d'un deuxième courant d'obscurité de référence (DC$_{Ref,Sp}$) à la température de référence T$_{Ref}$, et **en ce que** des mesures de référence sont effectuées à une durée de stockage variée ($t_{Sp}$) pour déterminer le deuxième courant d'obscurité de référence (DCRef,Sp).

2. Procédé selon la revendication 1, dans lequel le facteur d'adaptation est

$$2^{\frac{T-T_{Ref}}{T_d}},$$ T$_d$ désignant une différence de température à laquelle un courant d'obscurité est doublé.

3. Procédé selon la revendication 1 ou 2, dans lequel le signal du pixel (20) est corrigé en multipliant le premier courant d'obscurité par un temps d'intégration ($t_{int}$) et en multipliant le deuxième courant d'obscurité par une durée de stockage ($t_{Sp}$).

4. Procédé selon l'une des revendications précédentes, dans lequel le premier courant d'obscurité est déterminé avec le facteur d'adaptation dépendant de la température à partir d'un premier courant d'obscurité de référence (DC$_{Ref,PD}$) à la température de référence T$_{Ref}$.

5. Procédé selon la revendication 4, dans lequel des mesures de référence sont effectuées à un temps d'intégration varié ($t_{int}$) pour déterminer le premier courant d'obscurité de référence (DC$_{Ref,PD}$).

6. Procédé selon l'une des revendications précédentes, dans lequel le premier courant d'obscurité de référence (DC$_{Ref,PD}$) et/ou le deuxième courant d'obscurité de référence (DC$_{Ref,Sp}$) est déterminé par une analyse de régression des signaux du pixel respectif (20) sur la base des points de soutien obtenus en faisant varier le temps d'intégration ($t_{int}$) et/ou la durée de stockage ($t_{Sp}$).

7. Procédé selon l'une des revendications précédentes, dans lequel la durée de stockage ($t_{Sp}$) est variée en modifiant le temps de lecture du capteur d'images (12).

8. Procédé selon l'une des revendications précédentes, dans lequel la durée de stockage ($t_{Sp}$) est variée en modifiant l'ordre des lignes de pixels ou des colonnes de pixels lues, en particulier en lisant les lignes de pixels ou les colonnes de pixels dans l'ordre inverse.

9. Procédé selon l'une des revendications précédentes, dans lequel la durée de stockage ($t_{Sp}$) est variée par une plage de lecture modifiée qui ne commence pas par la première ligne ou colonne et qui ne commence pas par la dernière ligne ou colonne.

10. Procédé selon l'une des revendications précédentes, dans lequel au moins un pixel obscurci (20) est utilisé pour mesurer la température *T*.

11. Caméra (10), en particulier caméra de sécurité, comportant un capteur d'images (12) et une unité d'évaluation (14) qui est réalisée pour corriger les signaux des pixels (20) du capteur d'images (12) par un procédé selon l'une des revendications précédentes.

## Figur 1

## Figur 2

Figur 3

| Zeile | 1. Bild Richtung | 1. Bild Zeit | 2. Bild Richtung | 2. Bild Zeit | 3. Bild Richtung | 3. Bild Zeit |
|---|---|---|---|---|---|---|
| 1 | ↓ | 0 | ↓ | 0 | ↑ | 2 |
| ⋮ | | | | | | |
| 256 | | 1 | | 2 | | 1 |
| ⋮ | | | | | | |
| 512 | | 2 | | 4 | | 0 |

Figur 4

| Zeile | 1. Bild Richtung | 1. Bild Zeit | 2. Bild Richtung | 2. Bild Zeit | 3. Bild Richtung | 3. Bild Zeit | 4. Bild Richtung | 4. Bild Zeit |
|---|---|---|---|---|---|---|---|---|
| 1 | ↓ | 0 | ↑ | 2 | ↑ | 1 | | |
| ⋮ | | | | | | | | |
| 256 | | 1 | | 1 | | 0 | ↓ | 0 |
| ⋮ | | | | | | | | |
| 512 | | 2 | | 0 | | | | 1 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3949162 A
- US 8622302 B2
- EP 3062347 A1
- DE 102015003134 B4
- US 8975570 B2
- US 9106857 B1
- EP 2721810 B1
- DE 4309724 A1
- US 20160277691 A1